# EUROPEAN PATENT SPECIFICATION

(11) **EP 3 387 917 B1**
(45) Date of publication and mention of the grant of the patent: **07.08.2019**
(21) Application number: 17166542.5
(22) Date of filing: 13.04.2017
(51) Int. Cl.: A23N 15/04, A23N 15/08, B26D 3/26

(54) **DEVICE AND METHOD FOR CUTTING NATURAL PRODUCTS**
VORRICHTUNG UND VERFAHREN ZUM SCHNEIDEN VON NATURPRODUKTEN
DISPOSITIF ET PROCÉDÉ POUR COUPER DES DENRÉES NATURELLES

(43) Date of publication of application: 17.10.2018
(73) Proprietor: GEGE Machinebouw B.V., 5464 RA Veghel (NL)
(72) Inventor: van Asseldonk, Johannes Maria, 5464 RA Veghel (NL)
(74) Representative: Hylarides, Paul Jacques

(56) References cited:
- GB-A- 2 371 472
- JP-A- 2002 238 532
- JP-A- 2003 102 454
- JP-A- 2004 081 030
- US-A- 3 764 717

## Description

The application relates to a device and method for cutting elongate natural products provided with roots, particularly products with a root base, such as leek, scallion or spring onion.

Systems are known for severing one or more of the outer ends of leeks, for instance severing the root base therefrom, wherein the leeks are placed randomly on a conveyor belt, wherein the roots of the leek are placed against a mechanical stop provided along the conveyor belt. The leeks here lie on top of each other and jumbled together, and thus in principle do not lie very precisely against the mechanical stop. The leeks are then all cut at the same position relative to the conveyor belt using a rotary circular knife. Because the cutting is not precise, cutting usually takes place and an additional, manual processing step is necessary, for instance in the form of additional cutting by hand of the already cut leek.

This known method does however have a number of drawbacks. Firstly, an additional processing step is required since the known systems do not cut all leeks sufficiently precisely at the correct position, and the manual additional cutting is thus essential. This additional processing step increases costs and/or can have an adverse effect on the quality of the leek.

Another drawback of the known systems is that they make use of rotary circular knives for severing the roots of the products. Because the roots are full of sand, these circular knives become blunt quickly, whereby the quality of the cut surface decreases. There is further the possibility that the rotary circular knives contaminate the cut surface of the products. This can diminish the shelf life of the product and/or the appearance of the product. An attractive appearance can be important in practice for the marketability of the product.

JP 2004-41102 A describes a cutting device for natural products which is suitable for severing the root portion of a leek transported on a conveyor. The cutting device comprises a cutting unit which is displaceable in lateral direction using a displacing mechanism for the purpose of severing the root portion at a suitable position. The cutting position is determined using a control unit and an optical detection element on the basis of the outline of the leek.

A drawback of the known cutting device is that the desired cutting position cannot be determined precisely enough, so that too much or conversely too little is severed from the leek in practice. If too little is severed, the leeks also have to be further processed manually.

JP 2003 102454 discloses an apparatus for cutting the root part of Welsh onions wherein the onions are cut at a fixed length. JP 2002-238532 discloses an apparatus for cutting down a subterranean stem for shipping treatment of Welsh onions in order to remove the roots from the onions, wherein the cutting length is determined based on a cross section contour or a change in colour at the root of the onion. Both apparatus have the disadvantage that the cutting length cannot be determined precisely enough. Additionally, both apparatus have a relatively complex construction.

It is an object to provide a method and device whereby the natural products of the stated type can be cut in precise manner and/or to reduce the manual labour of further processing as far as possible.

According to a first aspect, at least one of the objects is achieved at least partially in a device for cutting elongate natural products provided with roots, particularly leeks, wherein each natural product has a relatively soft root portion and a relatively hard product portion provided on the root portion, the device comprising:
- a feed conveyor configured to transport the natural products in a longitudinal direction, wherein the feed conveyor is further configured to hold the natural products with their longitudinal direction in a substantially transverse direction, substantially transversely of the longitudinal direction, during transport;
- a position detector disposed close to the feed conveyor and configured to detect the respective transverse positions of the outer ends of the relatively hard product portions of the passing natural products;
- a cutting position determining unit connected to the position detector for determining the different desired cutting positions of the natural products subject to the detected transverse positions of the outer ends of the natural products;
- a cutting unit disposed close to the feed conveyor and connected to the cutting position determining unit, and configured to cut the natural products transported therealong, wherein the cutting unit comprises:
   - a cutting element for cutting one or more natural products;
   - a displacing mechanism on which the cutting element is arranged, wherein the displacing mechanism is configured to displace the cutting element in transverse direction to the respective cutting position for cutting a passing natural product,
wherein the device further comprises:
- a second displacing mechanism provided with a support, wherein the second displacing mechanism is configured to displace the support in transverse direction toward or away from the feed conveyor;
- pins mounted or formed on the support and extending toward the position of the natural products, wherein the pins are formed to penetrate through the relatively soft root portion but to be stopped by the relatively hard product portion;
- a sensor configured to detect the position of the support, wherein the sensor is configured to detect the position of the support when the support has been displaced as far as possible in the direction of the natural product, so that the outer end of one or more of the pins touches the outer end of the relatively hard product portion.

A suitable cutting position on the feed conveyor can in this way be determined for each natural product. This cutting position can in principle be different for each of the natural products on the feed conveyor, depending on, among other factors, the form and dimensions of the natural product and the position in which they are arranged on the feed conveyor. This suitable position can for instance be an optimal position (in the sense of the value to the consumer). Each natural product can then further also be cut at this suitable cutting position, so that further processing is in principle no longer necessary.

The device also makes it possible to determine the position of the transition between the soft and hard portion for each individual natural product on the feed conveyor in simple and precise manner, to determine on the basis of this position a desired cutting position and then control the cutting unit such that the cutting operation is performed at the correct moment and at the correct transverse cutting position.

By making use of an intelligent measuring system a suitable or even the ideal cutting position of each natural product can be measured independently and the cutting element (for instance the cutting knife or the water jet cutter to be described below) can then be carried to this suitable (ideal) position. The cutting position is thus in principle different for each natural product.

In an embodiment of the invention the displacing mechanism is embodied such that the position of the cutting element is adjusted during cutting to the detected position of the transition between the hard and soft portions of the relevant natural product passing the cutting element at that moment. The position of the cutting element will therefore in principle vary as the position of said transitions of successive natural products varies.

In order to ensure a good timing of the displacement of the cutting element so that the cutting element is situated at the desired cutting position as soon as the associated natural product arrives, the device can be provided with a determining unit configured to determine the longitudinal position of a natural product on the feed conveyor (i.e. the position of the natural product in the transport direction of the feed conveyor). The feed conveyor comprises for instance an endless conveyor belt divided into successive compartments. The determining unit can then be configured to determine the longitudinal position of a compartment relative to the position detector and the cutting unit.

In other embodiments such a determining unit is otherwise omitted. It is for instance possible to work with a pre-known, optionally variable conveyor belt speed so that it is known or can be easily calculated beforehand when a natural product which is being transported, the transverse position of which has been determined by the position detector, has come to lie at the position of the cutting unit.

The cutting position determining unit can be configured to determine for each of the passing natural products the transverse position of the transition between the product portion and the root portion. On the basis of this position the cutting unit can sever the root portion from the product portion in precise manner.

When it is stated here that the root portion (also referred to here as the root base) is severed, this can mean that a part of the root portion or the whole root portion is severed. It is further preferably only the root portion which is severed, and not the adjoining product portion (besides optionally the part of the natural product lying opposite).

In an example the first and/or second displacing mechanism can comprise an extending cylinder which extends in transverse direction, wherein the cutting element and the support are arranged on the extendable part of the extending cylinder. The sensor can more particularly be configured to detect the position of the support when the support has been displaced in the direction of the natural product as far as possible, so that the outer end of one or more of the pins touches the outer end of the relatively hard product portion. The position of said transition can hereby be determined.

Embodiments other than that with an extending cylinder and support are however likewise possible. In a determined embodiment the position detector is an optical detector, particularly a camera, which is configured to detect the position of the transition between the product portion and the root portion of a natural product on the feed conveyor.

As described above, the usual rotary circular knives may contaminate the natural products during cutting. In determined embodiments the cutting unit comprises therefore a water jet cutting unit. The water jet cutting unit, also referred to in short as the water jet cutter, comprises for instance a jet tube for supplying water under high pressure and a nozzle connected to the jet tube for dispensing a water jet. The water jet is sprayed out under such high pressure that the natural product can be cut quickly and precisely thereby, with a greatly reduced risk of contamination. The nozzle is preferably arranged on the (first) displacing mechanism so that the correct cutting position can be set thereby.

The natural products can be supplied in numerous ways. In a determined embodiment use is made of a feed conveyor comprising a lower driven endless belt and an upper driven endless belt, wherein the intermediate space between the two endless belts is configured to hold the natural products in position during transport thereof. The endless belts can further be embodied such that they hold the natural products during transport. The positions of the natural products on the lower endless belt thus remain the same during transport, so that a transverse position, determined in a first step, of the transition between the hard and soft portions of a natural product can be used in a second step to set the transverse cutting position at which this natural product in question is cut.

In further embodiments the natural products are cut at both outer ends instead of only at the root end. Use can once again be made for this purpose of rotary knives and/or of a water jet cutter. The outer end of a natural product lying opposite the roots is often severed using a cutting unit which is stationary at least during transport for cutting the natural product transported therealong at a fixed instead of a variable (transverse) position.

According to another aspect, a method is provided for cutting elongate natural products provided with roots, particularly leeks, wherein each natural product has a relatively soft root portion and a relatively hard product portion provided on the root portion, the method comprising of:
- having a feed conveyor transport the natural products in a longitudinal direction, wherein the natural products are held with their longitudinal direction in a substantially transverse direction, substantially transversely of the longitudinal direction;
- having a position detector detect the respective transverse positions of the outer ends of the relatively hard product portions of the passing natural products;
- having a cutting position determining unit determine the different desired cutting positions of the natural products subject to the detected transverse positions of the outer ends of the natural products;
- having a cutting unit cut the natural products transported therealong, wherein the cutting comprises of:
   - displacing a cutting element in transverse direction to a cutting position associated with a natural product which will pass;
   - having the cutting element cut the relevant natural product at the cutting position;
wherein determining a desired cutting position comprises of:
- displacing a support, provided with pins extending toward the position of the natural products, in transverse direction toward the feed conveyor, so that the pins penetrate into the relatively soft root portion until the pins are stopped by the relatively hard product portion;
- detecting the position of the support as soon as the pins have been stopped by the presence of the relatively hard product portion;
- determining the suitable cutting position of the relevant natural product on the basis of the position of the support.

In the case of a number of natural products transported on the feed conveyor the method can comprise of repeating for each of the natural products the displacement of the cutting element to a suitable cutting position and cutting the relevant natural product, so that each natural product is cut in the correct manner.

In a determined embodiment the method comprises of determining the longitudinal position of a natural product on the feed conveyor and/or of determining for each of the passing natural products the transverse position of the transition between the product portion and the root portion and severing the root portion from the natural product on the basis of the determined transverse position of the transition.

The method can particularly comprise of having the position detector generate a position signal representative of the position of the transition between the root portion and the product portion of a natural product, having the cutting position determining unit receive the position signal, and determining the desired cutting position subject to the received position signal.

Determining a suitable cutting position can be realized in the following manner:
- displacing a support, provided with pins extending toward the position of the natural products, in transverse direction toward the feed conveyor, so that the pins penetrate into the relatively soft root portion until the pins are stopped by the relatively hard product portion;
- detecting the position of the support as soon as the pins have been stopped by the presence of the relatively hard product portion;
- determining the suitable cutting position of the relevant natural product on the basis of the position of the support.

The actual cutting of at least one of the outer ends of the natural product preferably entails the water jet cutting so that a clean and attractive cut surface can be realized. The cutting element further does not become blunt (as is the case with the usual cutting knives, certainly when some amount of sand and/or soil is still present in the root portion).

The invention will be elucidated hereinbelow on the basis of the description of several embodiments thereof. Reference is made in the description to the accompanying figures, in which:
- Figure 1 shows a top view of a device according to an embodiment of the invention, without natural products;
- Figure 2 shows the top view of figure 1 with natural products;
- Figure 3 shows a cross-section at the position of the position detector of the embodiment according to figures 1 and 2;
- Figure 4 shows a cross-section at the position of the position detector of a second embodiment;
- Figure 5 shows a cross-section at the position of the cutting unit of a third embodiment;
- Figures 6A-6E show front views of various embodiments of a support provided with pins.

The figures show a device 1 for cutting elongate natural products provided with roots, particularly leek, scallion or spring onion. The natural products provided with roots have a relatively soft root portion (also referred to as root base) and a relatively hard product portion provided on the root portion. The device comprises a feed conveyor 2 for transporting the natural products (in the shown example the natural products are formed by leeks) in transport direction or longitudinal direction (P_{L}). Feed conveyor 2 comprises a lower belt conveyor 3 and an upper belt conveyor 4. The lower belt conveyor has a number of endless conveyor belts: a first, relatively long endless conveyor belt 5, in addition thereto a second, relatively short endless conveyor belt 6 parallel to the first conveyor belt, and a third and fourth endless conveyor belt 7, 7' lying one above the other in line with second conveyor belt 6. The first and second conveyor belts are trained around rollers 8, 9 and 10 and are driven by electric motor 12. The electric motor is connected to a control unit 20 (for instance a PLC) in known manner. The third and fourth conveyor belts 7, 7' are trained around rollers 11, 11' and 15, 15' and driven by electric motors 14, 14'. The third and fourth conveyor belts 7, 7' are disposed on a frame which enables adjustment of the position in transverse direction (P_{T}).

The upper belt conveyor 4 comprises an endless conveyor belt which can be driven with a drive motor 13. An intermediate space is present between the lower part of this endless conveyor belt and the upper part of the endless conveyor belts 5 of lower belt conveyor 3. This intermediate space is so small that natural products can be held therein, so that the natural products remain in the same orientation during transport.

The natural products are here yet again placed (manually or with a mechanical feed) on conveyor belt 5, 6 in a predetermined arrangement. Conveyor belts 5, 6 are provided with spacers 23 which form successive compartments 24. One natural product (N) is placed in each compartment 24. The mutual distance (a) of the natural products (c.t.c.) can for instance be 80 mm. The natural products are also yet again placed with the root side (W) against a mechanical stop 25. The placing also takes place when the conveyor belts are running.

When conveyor belts 5, 6 with the natural products (N) run on a little, the natural product is pressed onto the belt from the upper side with the above stated conveyor belt or holding belt of upper belt conveyor 4. This holding belt can be provided with a cellular rubber coating and movable spring-mounted rollers in order to enable a good hold of the natural products without damage thereto.

The device is optionally provided with a determining unit 30 of the longitudinal position and/or speed of a natural product on conveyor belt 5, 6. The determining unit can for instance be embodied as an encoder or a sensor whereby control unit 20 (PLC) knows when a natural product is passing. The device is further provided with a position detector 40 configured to detect the respective transverse positions (i.e. positions on an imaginary transverse axis perpendicularly of transport direction P_{L} of feed conveyor 2) of in each case a specific part of the passing natural products.

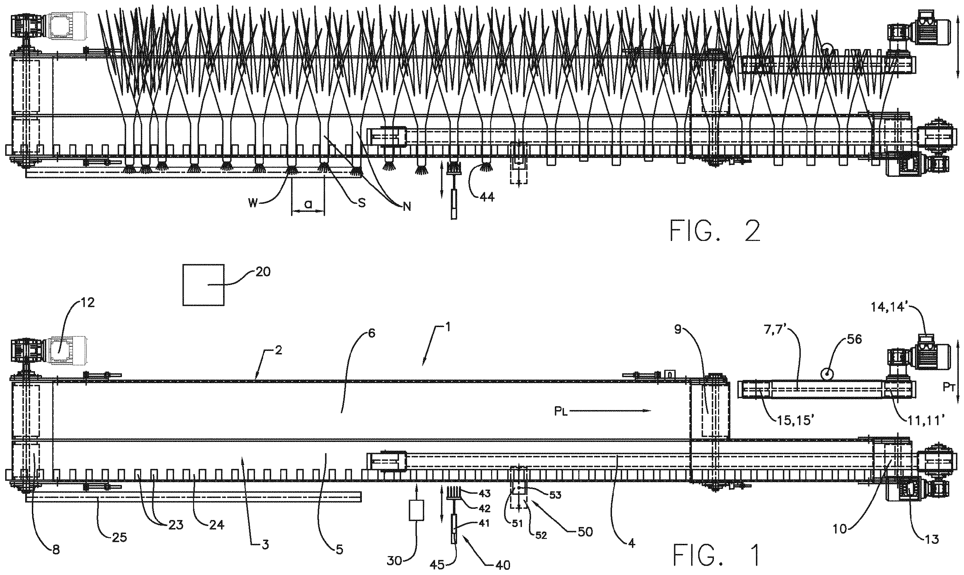

Figures 1-3 show a first embodiment of a position detector 40 in detail. In this embodiment position detector 40 comprises a pneumatic cylinder 41 which is extended once for every passing natural product. Cylinder 40 is provided at the outer end with a support 42 provided with a number of pins 43. Pins 43 extend in transverse direction toward the natural products and are formed such that they penetrate through the roots (W) of the natural product (N) and against the hard portion (S) of the natural product. The transition 44 from the root portion (W) to the hard product portion (S) in many cases corresponds to the ideal cutting position of the natural product. Cylinder 41 is provided with an accurate distance sensor 45 which senses the stroke of the cylinder when the stroke has reached the hard portion of the natural product. Distance sensor 45 generates a position signal representative of the stroke of the cylinder and thereby of the position of the above stated transition in the natural product. This position signal is received by control unit 20 and saved therein.

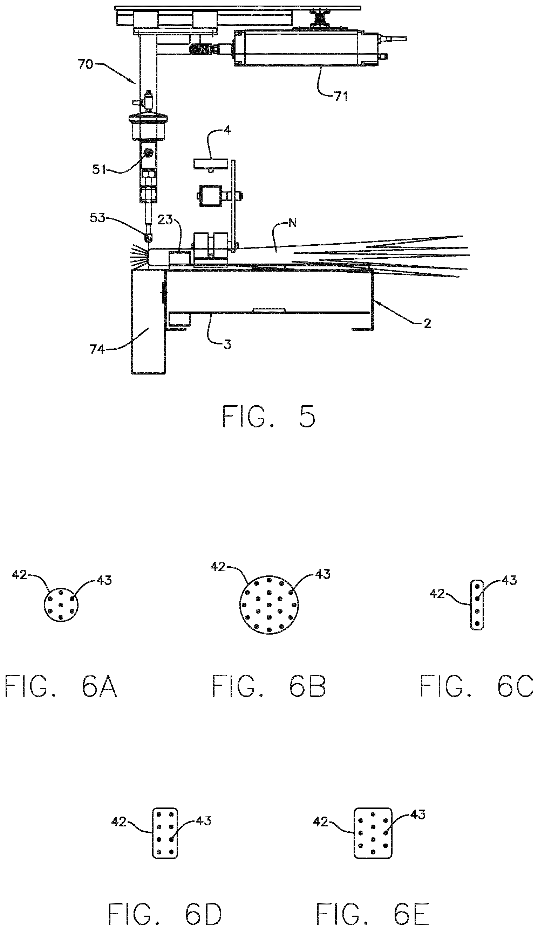

Control unit 20 (or the above stated distance sensor 45) determines the ideal cutting position of the relevant passing natural product. Control unit 20 is also connected to a cutting unit, for instance cutting unit 50 of the embodiment of figures 1-2 or cutting unit 70 of the embodiment of figure 5. Referring to figures 1 and 2, the cutting unit can comprise a cutting element 51 for cutting the natural product and a displacing mechanism 52 whereby the cutting element can be displaced in transverse direction until the cutting element has reached the ideal cutting position determined by control unit 20. When cutting element 51 has reached the ideal cutting position determined by control unit 20 and the associated natural product has also come to lie just in front of cutting element 51, control unit 20 controls cutting unit 50 such that the natural product is cut precisely at the ideal cutting position specific to that natural product in question.

Cutting element 50 can comprise a rotary circular knife. In other embodiments cutting element 51 is formed by a water jet cutting unit. Such a unit comprises a spray nozzle or cutter head whereby a jet of liquid (for instance water, although other liquids are also possible and lie within the reach of the skilled person) can be sprayed toward the natural product with great force. Cutter head 53 is mounted on a displacing mechanism such as a carriage which can be moved in linear manner. The displacing mechanism further comprises an electric motor, for instance a servomotor, for driving the carriage. The carriage or motor is provided with an encoder or sensor whereby the position of the cutter head can be determined. The cutter head is now controlled to the ideal position for each natural product using the measured value. Each natural product is in this way cut at exactly the right position, whereby manual further cutting is no longer necessary. The natural product moreover has a clean and sharp cut surface owing to the use of the water jet cutting unit.

If desired, the natural product (N) can then also be cut to length further downstream by also having a cutting operation performed on the leaf side opposite the root side. A further cutting unit 56 can be provided for this purpose. The cutting element of this cutting unit is here preferably not controlled individually for each natural product, as is the case in the above stated cutting unit 40, but can be set to a determined desired length. The cutting element can here also be a water jet with the above stated advantages, but can also be a rotary circular knife.

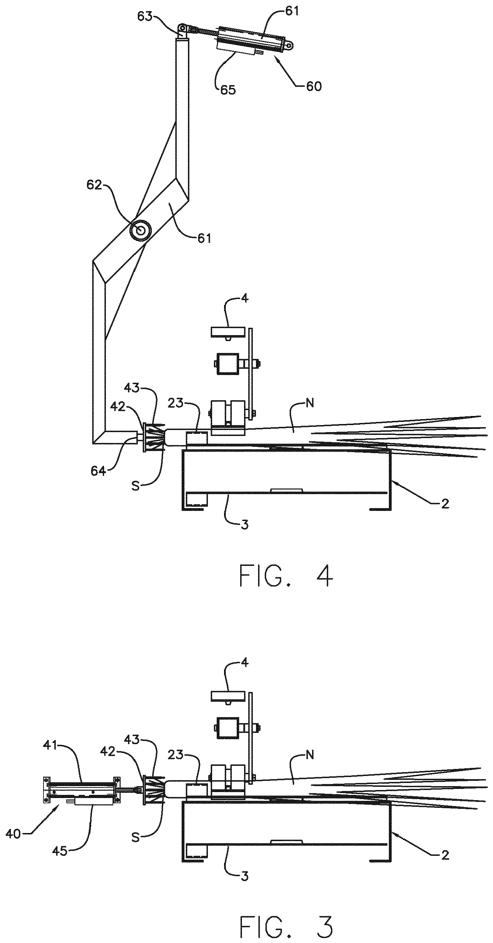

Figure 4 shows a second embodiment of a position sensor 60. The embodiment largely corresponds to the first embodiment described with reference to figures 1-3. The same reference numerals are therefore used as far as possible in figure 4. In this embodiment position detector 60 comprises a pneumatic cylinder 41 which is mounted on a fixed, stationary frame (not shown) and which is extended once for every passing natural product. At the outer end cylinder 40 is mounted pivotally on a pivot arm 61. This pivot arm is arranged for pivoting around a rotation point 62. When cylinder 41 is extended in a first direction and the upper end 63 of pivot arm 61 is thereby pivoted in a first direction, the opposite outer end 64 of pivot arm 61 will be displaced in an opposite direction. The above stated support 42 is arranged pivotally on outer end 64. Support 42 is provided with a number of transverse pins 43. The pins are once again formed such that they penetrate through the roots (W) of the natural product (N) and against the hard portion (S) of the natural product. Position sensor 60 is provided with an accurate distance sensor 45 which senses the stroke of the cylinder until the pins press against the hard portion of the natural product. Distance sensor 45 generates a position signal which is representative of the stroke of the cylinder and thereby of the position of the hard/soft transition in the natural product. This position signal is received by control unit 20 and saved therein.

An advantage of the embodiment of the position detector 60 shown in figure 4 relative to the position detector 40 of figures 1-3 is that the overall width of device 1 can be smaller (more compact), so that the floor area required for setting up the device is minimal. Another advantage is that the sensitive position detector 60 in the embodiment of figure 4 is better protected against contamination and damage.

In order to make the device more compact a narrower cutting unit 70 can be applied instead of the above described embodiment of cutting unit 50. Figure 5 shows a view of such a narrow compact cutting unit 70. The construction of cutting unit 70 largely corresponds to that of cutting unit 50. The same reference numerals are used as far as possible in figure 5. Referring to figure 5, cutting unit 70 can comprise a cutting element 51 for cutting the natural product and a displacing mechanism 71 whereby the cutting element can be displaced in upward and downward direction until the cutting element has reached the ideal cutting position determined by control unit 20. Displacing mechanism 71 is placed substantially above feed conveyor 2 (instead of adjacently of feed conveyor 2, as is the case in displacing mechanism 52), so that the device takes up as little space as possible on the placing surface (i.e. the floor).

Figures 6A-6E provide diverse examples of a support provided with pins according to different embodiments. The number of pins and the distribution thereof over the surface of the support have an effect on the distance range, the pressure to be exerted, the ease with which the pins can penetrate through the relatively soft product portion and so on. The free outer ends of the pins can further optionally be provided with a pointed outer end in order to facilitate the penetration. The greater the number of pins, the greater the pressure which will generally have to be overcome before the free outer ends of the pins arrive at the firm product portion. On the other hand, the more pins, the greater the chance in general that the pins are inserted into the product at the correct position(s), which may improve the precision and reproducibility of the position determination.

Figures 6A-6E show embodiments wherein the support comprises two or more pins positioned at different height and/or width positions. In figures 6A and 6B the pins are provided in the centre of the support and at respectively one and two radial distances from the centre of the support, provided in figure 6C are four pins at four different height positions, provided in figure 6D are four rows of two pins (with each pin at a different width position), wherein the rows are arranged at four height positions, and in figure 6E pins are provided all around two central pins positioned one above the other.

The present invention is not limited to the embodiments thereof described herein. The rights sought are rather determined by the following claims, within the scope of which many modifications can be envisaged.

## Claims

1. Device (1) for cutting elongate natural products (N) provided with roots, particularly leeks, wherein each natural product has a relatively soft root portion (W) and a relatively hard product portion (S) provided on the root portion, the device comprising:
- a feed conveyor (2) configured to transport the natural products in a longitudinal direction (P_{L}), wherein the feed conveyor is further configured to hold the natural products with their longitudinal direction in a substantially transverse direction, substantially transversely of the longitudinal direction, during transport;
- a position detector (40;60) disposed close to the feed conveyor and configured to detect the respective transverse positions of the outer ends of the relatively hard product portions of the passing natural products;
- a cutting position determining unit (20) connected to the position detector for determining the different desired cutting positions of the natural products subject to the detected transverse positions of the outer ends of the natural products;
- a cutting unit (50;70) disposed close to the feed conveyor and connected to the cutting position determining unit, and configured to cut the natural products transported therealong, wherein the cutting unit comprises:
- a cutting element (51) for cutting one or more natural products;
- a displacing mechanism (52;71) on which the cutting element is arranged,
wherein the displacing mechanism is configured to displace the cutting element in transverse direction to the respective cutting position for cutting a passing natural product;
**characterized in that** the device comprises:
- a second displacing mechanism (41;61) provided with a support (42), wherein the second displacing mechanism is configured to displace the support in transverse direction toward or away from the feed conveyor (2);
- pins (43) mounted or formed on the support and extending toward the position of the natural products, wherein the pins are formed to penetrate through the relatively soft root portion (W) but to be stopped by the relatively hard product portion (S);
- a sensor configured (45) to detect the position of the support, wherein the sensor is configured to detect the position of the support when the support has been displaced as far as possible in the direction of the natural product, so that the outer end of one or more of the pins touches the outer end of the relatively hard product portion.

2. Device as claimed in claim 1, further comprising a determining unit (30) of the longitudinal position of a natural product on the feed conveyor.

3. Device as claimed in claim 1 or 2, wherein the cutting position determining unit (20) is configured to determine for each of the passing natural products the transverse position of the transition (44) between the product portion and the root portion, and wherein the cutting unit is configured to sever the root portion from the product portion.

4. Device as claimed in any of the foregoing claims, wherein the position detector (40;60) is configured to generate a position signal representative of the position of the transition between the root portion and the product portion of a natural product and wherein the cutting position determining unit is configured to receive the position signal and to determine the desired cutting position subject to the received position signal, wherein the desired cutting position preferably corresponds to the position of said transition between the product portion and root portion.

5. Device as claimed in any of the foregoing claims, wherein the position detector (40;60) is an optical detector, particularly a camera, which is configured to detect the position of the transition between the product portion and the root portion of a natural product on the feed conveyor and/or wherein the cutting unit comprises a water jet cutting unit.

6. Device as claimed in any of the foregoing claims, wherein the feed conveyor (3,4) comprises a lower driven endless belt and an upper driven endless belt, wherein the intermediate space between the two endless belts is configured to hold the natural products in position during transport thereof, wherein the intermediate space is preferably configured to hold the natural products.

7. Device as claimed in any of the foregoing claims, comprising a second cutting element for severing the opposite outer end of the natural product, wherein the second cutting element is preferably stationary during transport of the natural products.

8. Device as claimed in any of the foregoing claims, comprising two or more rows of pins (43) positioned one above the other, wherein a row comprises one or more pins.

9. Device as claimed in any of the foregoing claims, wherein the support comprises two or more pins positioned at different height and/or width positions.

10. Method for cutting elongate natural products provided with roots, particularly leeks, wherein each natural product has a relatively soft root portion and a relatively hard product portion provided on the root portion, the method comprising of:
- having a feed conveyor transport the natural products in a longitudinal direction, wherein the natural products are held with their longitudinal direction in a substantially transverse direction, substantially transversely of the longitudinal direction;
- having a position detector detect the respective transverse positions of the outer ends of the relatively hard product portions of the passing natural products;
- having a cutting position determining unit determine the different desired cutting positions of the natural products subject to the detected transverse positions of the outer ends of the natural products;
- having a cutting unit cut the natural products transported therealong, wherein the cutting comprises of:
- displacing a cutting element in transverse direction to a cutting position associated with a natural product which will pass;
- having the cutting element cut the relevant natural product at the cutting position;
**characterized in that** determining a desired cutting position comprises of:
- displacing a support, provided with pins extending toward the position of the natural products, in transverse direction toward the feed conveyor, so that the pins penetrate into the relatively soft root portion until the pins are stopped by the relatively hard product portion;
- detecting the position of the support as soon as the pins have been stopped by the presence of the relatively hard product portion;
- determining the suitable cutting position of the relevant natural product on the basis of the position of the support.

11. Method as claimed in claim 10, wherein the method further comprisesrepeating for each of the natural products the displacement of the cutting element to a suitable cutting position and cutting the relevant natural product.

12. Method as claimed in claim 10 or 11, wherein the method further comprisesdetermining the longitudinal position of a natural product on the feed conveyor.

13. Method as claimed in any of the claims 10-12, wherein the method further comprisesdetermining for each of the passing natural products the transverse position of the transition between the product portion and the root portion and severing the root portion from the natural product on the basis of the determined transverse position of the transition.

14. Method as claimed in any of the claims 10-13, wherein the method further compriseshaving the position detector generate a position signal representative of the position of the transition between the root portion and the product portion of a natural product, having the cutting position determining unit receive the position signal, and determining the desired cutting position subject to the received position signal.

15. Method as claimed in any of the claims 10-14, wherein cutting of a natural product comprises water jet cutting thereof.

## Patentansprüche

1. Vorrichtung (1) zum Schneiden von langgestreckten Naturprodukten (N), die mit Wurzeln versehen sind, insbesondere Lauch, wobei jedes Naturprodukt einen relativ weichen Wurzelabschnitt (W) und einen relativ harten Produktabschnitt (S), der auf dem Wurzelabschnitt bereitgestellt ist, hat, wobei die Vorrichtung aufweist:
- einen Zuführförderer (2), der aufgebaut ist, um die Naturprodukte in einer Längsrichtung (P_{L}) zu transportieren, wobei der Zuführförderer ferner aufgebaut ist, um die Naturprodukte während des Transports mit ihrer Längsrichtung in einer im Wesentlichen queren Richtung zu halten, welche im Wesentlichen quer zu der Längsrichtung ist;
- einen Positionsdetektor (40; 60), der nahe dem Zuführförderer angeordnet ist und aufgebaut ist, um die jeweiligen Querpositionen der äußeren Enden der relativ harten Produktabschnitte der vorbeilaufenden Naturprodukte zu detektieren;
- eine Schneidpositionsbestimmungseinheit (20), die mit dem Positionsdetektor verbunden ist, um die verschiedenen gewünschten Schneidpositionen der Naturprodukte, die Gegenstand der detektierten Querpositionen der äußeren Enden der Naturprodukte sind, zu bestimmen;
- eine Schneideinheit (50; 70), die nahe dem Zuführförderer angeordnet ist und mit der Schneidpositionsbestimmungseinheit verbunden ist und aufgebaut ist, um die dort entlang transportierten Naturprodukte zu schneiden, wobei die Schneideinheit aufweist:
- ein Schneidelement (51) zum Schneiden eines oder mehrerer Naturprodukte;
- einen Verschiebungsmechanismus (52; 71), auf dem das Schneidelement angeordnet ist, wobei der Verschiebungsmechanismus aufgebaut ist, um das Schneidelement in der Querrichtung zu der jeweiligen Schneidposition zum Schneiden eines vorbeilaufenden Naturprodukts zu verschieben;
**dadurch gekennzeichnet, dass** die Vorrichtung aufweist:
- einen zweiten Verschiebungsmechanismus (41; 61), der mit einer Stütze (42) versehen ist, wobei der zweite Verschiebungsmechanismus aufgebaut ist, um die Stütze in der Querrichtung zu dem Zuführförderer (2) oder von ihm weg zu verschieben;
- Stifte (43), die auf der Stütze montiert oder ausgebildet sind und sich in Richtung der Position der Naturprodukte erstrecken, wobei die Stifte ausgebildet sind, um den relativ weichen Wurzelabschnitt (W) zu durchdringen, aber von dem relativ harten Produktabschnitt (S) gestoppt zu werden;
- einen Sensor (45), der aufgebaut ist, um die Position der Stütze zu detektieren, wobei der Sensor aufgebaut ist, um die Position der Stütze zu detektieren, wenn die Stütze so weit wie möglich in die Richtung des Naturprodukts verschoben wurde, so dass das äußere Ende eines oder mehrerer Stifte das äußere Ende des relativ harten Produktabschnitts berührt.

2. Vorrichtung nach Anspruch 1, die ferner eine Bestimmungseinheit (30) der Längsposition eines Naturprodukts auf dem Zuführförderer aufweist.

3. Vorrichtung nach Anspruch 1 oder 2, wobei die Schneidpositionsbestimmungseinheit (20) aufgebaut ist, um für jedes der vorbeilaufenden Naturprodukte die Querposition des Übergangs (44) zwischen dem Produktabschnitt und dem Wurzelabschnitt zu bestimmen, und wobei die Schneideinheit aufgebaut ist, um den Wurzelabschnitt von dem Produktabschnitt zu trennen.

4. Vorrichtung nach einem der vorhergehenden Ansprüche, wobei der Positionsdetektor (40; 60) aufgebaut ist, um ein Positionssignal zu erzeugen, das die Position des Übergangs zwischen dem Wurzelabschnitt und dem Produktabschnitt eines Naturprodukts anzeigt, und wobei die Schneidpositionsbestimmungseinheit aufgebaut ist, um das Positionssignal zu empfangen und die gewünschte Schneidposition zu bestimmen, die Gegenstand des empfangenen Positionssignals ist, wobei die gewünschte Schneidposition vorzugsweise der Position des Übergangs zwischen dem Produktabschnitt und dem Wurzelabschnitt entspricht.

5. Vorrichtung nach einem der vorangehenden Ansprüche, wobei der Positionsdetektor (40; 60) ein optischer Detektor, insbesondere eine Kamera, ist, der aufgebaut ist, um die Position des Übergangs zwischen dem Produktabschnitt und dem Wurzelabschnitt eines Naturprodukts auf dem Zuführförderer zu detektieren, und/oder wobei die Schneideinheit eine Wasserstrahlschneideinheit aufweist.

6. Vorrichtung nach einem der vorangehenden Ansprüche, wobei der Zuführförderer (3, 4) ein unteres angetriebenes Endlosband und ein oberes angetriebenes Endlosband aufweist, wobei der Zwischenraum zwischen den zwei Endlosbändern aufgebaut ist, um die Naturprodukte während ihres Transorts in Position zu halten, wobei der Zwischenraum vorzugsweise aufgebaut ist, um die Naturprodukte aufzunehmen.

7. Vorrichtung nach einem der vorangehenden Ansprüche, die ein zweites Schneidelement zum Trennen des entgegengesetzten äußeren Endes des Naturprodukts aufweist, wobei das zweite Schneidelement vorzugsweise während des Transports der Naturprodukte ortsfest ist.

8. Vorrichtung nach einem der vorangehenden Ansprüche, die zwei oder mehr übereinander positionierte Stiftreihen (43) aufweist, wobei eine Reihe einen oder mehrere Stifte aufweist.

9. Vorrichtung nach einem der vorangehenden Ansprüche, wobei die Stütze zwei oder mehr Stifte aufweist, die auf unterschiedlichen Höhen- und/oder Breitenpositionen positioniert sind.

10. Verfahren zum Schneiden von langgestreckten Naturprodukten, die mit Wurzeln versehen sind, insbesondere Lauch, wobei jedes Naturprodukt einen relativ weichen Wurzelabschnitt und einen relativ harten Produktabschnitt, der auf dem Wurzelabschnitt bereitgestellt ist, hat, wobei das Verfahren aufweist:
- Transportierenlassen der Naturprodukte in einer Längsrichtung durch einen Zuführförderer, wobei die Naturprodukte mit ihrer Längsrichtung in einer im Wesentlichen queren Richtung gehalten werden, welche im Wesentlichen quer zu der Längsrichtung ist;
- Detektierenlassen der jeweiligen Querpositionen der äußeren Enden der relativ harten Produktabschnitte der vorbeilaufenden Naturprodukte durch den Positionsdetektor;
- Bestimmenlassen der verschiedenen gewünschten Schneidpositionen der Naturprodukte, die Gegenstand der detektierten Querpositionen der äußeren Enden der Naturprodukte sind, durch eine Schneidpositions bestimmungseinheit;
- Schneidenlassen der dort entlang transportierten Naturprodukte durch eine Schneideinheit, wobei das Schneiden aufweist:
- Verschieben eines Schneidelements in der Querrichtung zu einer Schneidposition, die zu einem Naturprodukt gehärt, das vorbeilaufen wird;
- Schneidenlassen des relevanten Naturprodukts an der Schneidposition durch das Schneidelement;
**dadurch gekennzeichnet, dass** das Bestimmen einer gewünschten Schneidposition aufweist:
- Verschieben einer Stütze, die mit Stiften versehen ist, die sich in der Querrichtung in Richtung des Zuführförderers in Richtung der Position der Naturprodukte erstrecken, so dass die Stifte in den relativ weichen Wurzelabschnitt eindringen, bis die Stifte durch den relativ harten Produktabschnitt gestoppt werden;
- Detektieren der Position der Stütze, sobald die Stifte durch das Vorhandensein des relativ harten Produktabschnitts gestoppt wurden;
- Bestimmen der geeigneten Schneidposition des relevanten Naturprodukts auf der Basis der Position der Stütze.

11. Verfahren nach Anspruch 10, wobei das Verfahren ferner das Wiederholen der Verschiebung des Schneidelements zu einer geeigneten Schneidposition und des Schneidens des relevanten Naturprodukts für jedes der Naturprodukte aufweist.

12. Verfahren nach Anspruch 10 oder 11, wobei das Verfahren ferner das Bestimmen der Längsposition eines Naturprodukts auf dem Zuführförderer aufweist.

13. Verfahren nach einem der Ansprüche 10 - 12, wobei das Verfahren ferner das Bestimmen der Querposition des Übergangs zwischen dem Produktabschnitt und dem Wurzelabschnitt und das Trennen des Wurzelabschnitts von dem Naturprodukt auf der Basis der bestimmten Querposition des Übergangs für jedes der vorbeilaufenden Produkte aufweist.

14. Verfahren nach einem der Ansprüche 10 - 13, wobei das Verfahren ferner aufweist: Erzeugenlassen eines Positionssignals, das die Position des Übergangs zwischen dem Wurzelabschnitt und dem Produktabschnitt eines Naturprodukts anzeigt, durch den Positonsdetektor, Empfangenlassen des Positionssignals durch die Schneidpositionsbestimmungseinheit und Bestimmen der gewünschten Schneidposition, die Gegenstand des empfangenen Positionssignals ist.

15. Verfahren nach einem der Ansprüche 10 - 14, wobei das Schneiden eines Naturprodukts dessen Wasserstrahlschneiden aufweist.

## Revendications

1. Dispositif (1) pour la coupe de produits naturels allongés (N) dotés de racines, particulièrement de poireaux, dans lequel chaque produit naturel présente une portion de racine relativement souple (W) et une portion de produit relativement dure (S) prévue sur la portion de racine, le dispositif comprenant :
- un transporteur d'alimentation (2) configuré pour transporter les produits naturels dans une direction longitudinale (P_{L}), dans lequel le transporteur d'alimentation est en outre configuré pour maintenir les produits naturels avec leur direction longitudinale dans une direction sensiblement transversale, sensiblement transversalement à la direction longitudinale, pendant le transport ;
- un détecteur de position (40 ; 60) disposé près du transporteur d'alimentation et configuré pour détecter les positions transversales respectives des extrémités extérieures des portions de produit relativement dures des produits naturels qui passent,
- une unité de détermination de position de coupe (20) raccordée au détecteur de position pour la détermination des différentes positions de coupe souhaitées des produits naturels soumis aux positions transversales détectées des extrémités extérieures des produits naturels ;
- une unité de coupe (50 ; 70) disposée près du transporteur d'alimentation et raccordée à l'unité de détermination de position de coupe, et configurée pour couper les produits naturels transportés le long de celle-ci, dans lequel l'unité de coupe comprend :
- un élément de coupe (51) pour couper un ou plusieurs produits naturels ;
- un mécanisme de déplacement (52 ; 71) sur lequel l'élément de coupe est agencé, dans lequel le mécanisme de déplacement est configuré pour déplacer l'élément de coupe dans une direction transversale dans la position de coupe respective pour couper un produit naturel qui passe ;
**caractérisé en ce que** le dispositif comprend :
- un second mécanisme de déplacement (41 ; 61) doté d'un support (42), dans lequel le second mécanisme de déplacement est configuré pour déplacer le support dans la direction transversale vers ou à l'écart du transporteur d'alimentation (2) ;
- des broches (43) montées ou formées sur le support et s'étendant vers la position des produits naturels, dans lequel les broches sont formées pour pénétrer au travers de la portion de racine relativement souple (W) mais pour être arrêtées par la portion de produit relativement dure (S) ;
- un capteur (45) configuré pour détecter la position du support, dans lequel le capteur est configuré pour détecter la position du support lorsque le support a été déplacé aussi loin que possible dans la direction du produit naturel de sorte que l'extrémité extérieure d'une ou plusieurs des broches touche l'extrémité extérieure de la portion de produit relativement dure.

2. Dispositif selon la revendication 1, comprenant en outre une unité de détermination (30) de la position longitudinale d'un produit naturel sur le transporteur d'alimentation.

3. Dispositif selon la revendication 1 ou 2, dans lequel l'unité de détermination de position de coupe (20) est configurée pour déterminer pour chacun des produits naturels qui passent la position transversale de la transition (44) entre la portion de produit et la portion de racine, et dans lequel l'unité de coupe est configurée pour détacher la portion de racine de la portion de produit.

4. Dispositif selon l'une quelconque des revendications précédentes, dans lequel le détecteur de position (40 ; 60) est configuré pour générer un signal de position représentatif de la position de la transition entre la portion de racine et la portion de produit d'un produit naturel et dans lequel l'unité de détermination de position de coupe est configurée pour recevoir le signal de position et pour déterminer la position de coupe souhaitée soumise au signal de position reçu, dans lequel la position de coupe souhaitée correspond de préférence à la position de ladite transition entre la portion de produit et la portion de racine.

5. Dispositif selon l'une quelconque des revendications précédentes, dans lequel le détecteur de position (40 ; 60) est un détecteur optique, particulièrement une caméra, qui est configurée pour détecter la position de la transition entre la portion de produit et la portion de racine d'un produit naturel sur le transporteur d'alimentation et/ou dans lequel l'unité de coupe comprend une unité de coupe à jet d'eau.

6. Dispositif selon l'une quelconque des revendications précédentes, dans lequel le transporteur d'alimentation (3, 4) comprend une courroie sans fin entraînée inférieure et une courroie sans fin entraînée supérieure, dans lequel l'espace intermédiaire entre les deux courroies sans fin est configuré pour maintenir les produits naturels en position pendant le transport de ceux-ci, dans lequel l'espace intermédiaire est de préférence configuré pour maintenir les produits naturels.

7. Dispositif selon l'une quelconque des revendications précédentes, comprenant un second élément de coupe pour détacher l'extrémité extérieure opposée du produit naturel, dans lequel le second élément de coupe est de préférence stationnaire pendant le transport des produits naturels.

8. Dispositif selon l'une quelconque des revendications précédentes, comprenant deux rangées de broches (43) ou plus positionnées les unes au-dessus des autres, dans lequel une rangée comprend une ou plusieurs broches.

9. Dispositif selon l'une quelconque des revendications précédentes, dans lequel le support comprend deux ou plus broches ou plus positionnées à différentes positions de hauteur et/ou largeur.

10. Procédé de coupe de produits naturels allongés dotés de racines, particulièrement de poireaux, dans lequel chaque produit naturel présente une portion de racine relativement souple et une portion de produit relativement dure prévue sur la portion de racine, le procédé comprenant :
- le transport par un transporteur d'alimentation des produits naturels dans une direction longitudinale, dans lequel les produits naturels sont maintenus avec leur direction longitudinale dans une direction sensiblement transversale, sensiblement transversalement à la direction longitudinale ;
- la détection par un détecteur de position des positions transversale respectives des extrémités extérieures des portions de produit relativement dures des produits naturels qui passent ;
- la détermination par une unité de détermination de position de coupe des différentes positions de coupe souhaitées des produits naturels soumis aux positions transversales détectées des extrémités extérieures des produits naturels ;
- la coupe par une unité de coupe des produits naturels transportés le long de celle-ci, dans lequel la coupe comprend :
- le déplacement d'un élément de coupe dans la direction transversale dans une position de coupe associée à un produit naturel qui passera ;
- la coupe par l'élément de coupe du produit naturel pertinent à la position de coupe ;
**caractérisé en ce que** la détermination d'une position de coupe souhaitée comprend :
- le déplacement d'un support, doté de broches s'étendant vers la position des produits naturels, dans la direction transversale vers le transporteur d'alimentation de sorte que les broches pénètrent dans la portion de racine relativement souple jusqu'à ce que les broches soient arrêtées par la portion de produit relativement dure ;
- la détection de la position du support dès que les broches ont été arrêtées par la présence de la portion de produit relativement dure ;
- la détermination de la position de coupe adaptée du produit naturel pertinent sur la base de la position du support.

11. Procédé selon la revendication 10, dans lequel le procédé comprend en outre la répétition pour chacun des produits naturels du déplacement de l'élément de coupe dans une position de coupe adaptée et la coupe du produit naturel pertinent.

12. Procédé selon la revendication 10 ou 11, dans lequel le procédé comprend en outre la détermination de la position longitudinale d'un produit naturel sur le transporteur d'alimentation.

13. Procédé selon l'une quelconque des revendications 10 à 12, dans lequel le procédé comprend en outre la détermination pour chacun des produits naturels qui passent de la position transversale de la transition entre la portion de produit et la portion de racine et le détachement de la portion de racine du produit naturel sur la base de la position transversale déterminée de la transition.

14. Procédé selon l'une quelconque des revendications 10 à 13, dans lequel le procédé comprend en outre la génération par le détecteur de position d'un signal de position représentatif de la position de la transition entre la portion de racine et la portion de produit d'un produit naturel, la réception par l'unité de détermination de position de coupe du signal de position, et la détermination de la position de coupe souhaitée soumise au signal de position reçu.

15. Procédé selon l'une quelconque des revendications 10 à 14, dans lequel la coupe d'un produit naturel comprend la coupe au jet d'eau de celui-ci.
